# EUROPÄISCHE PATENTSCHRIFT

(11) **EP 0 486 773 B1**
(45) Veröffentlichungstag und Bekanntmachung des Hinweises auf die Patenterteilung: **16.03.1994**
(21) Anmeldenummer: 91114405.3
(22) Anmeldetag: 28.08.1991
(51) Int. Cl.: A21C 13/02, B65G 17/34

(54) **Rechengehänge für Nachgärschränke**
Rake hanger for proofing chamber
Support en forme d'un râteau pour une chambre de fermentation

(30) Priorität: 23.11.1990 DE 4037275
(43) Veröffentlichungstag der Anmeldung: 27.05.1992
(73) Patentinhaber: Werner & Pfleiderer GmbH, 70469 Stuttgart (DE)
(72) Erfinder: Baur, Hellmut, Dipl.-Ing., W-7000 Stuttgart 1 (DE); Spazal, Hans, W-7073 Lorch (DE)

(56) Entgegenhaltungen:
- GB-A- 222 336
- US-A- 3 913 726

## Beschreibung

Die Erfindung betrifft ein Rechengehänge für Nachgärschränke entsprechend dem Oberbegriff des Anspruches 1.

Bei der Brotherstellung ist die selbsttätige Übergabe, Durchlauf und Ausgabe von Teiglingen in Nachgärschränken bekannt (z.B. DE-OS 32 38 801).

Aus der Praxis sind dabei als Traggehänge für die Brotformen im Nachgärschrank auch sogenannte Rechengehänge bekannt. Diese bestehen jeweils aus einem Profilträger mit einer Vielzahl angeschweisster Auflagebügel für die Aufnahme der Backformen oder Formverbände. Mittels zweier Gehängebügel wird das Rechengehänge die Breite des Gärschrankes durchgreifend frei pendelnd in ein Paar endloser Transportketten gehangen. Durch die nach der Art eines Rechens angeordneten Auflagebügel werden die Backformen an der Eingabe automatisch aufgenommen und nach Durchwanderung des Gärschrankes wieder automatisch an der Ausgabe abgesetzt.

Diese bis zuweilen bis fast 4m langen Rechengehänge sind relativ teuer in ihrer Herstellung und unterliegen in der ständig warmen und feuchten sowie leicht aggressiven Atmosphäre des Nachgärschrankes der Korrosion.

Der Erfindung liegt das Problem zugrunde, den Herstellungsaufwand für ein Rechengehänge sowie das Transportvolumen und den Reparaturaufwand zu senken und die Korrosionsanfälligkeit zu beseitigen. Dieses Problem wird mit den Massnahmen des Anspruches 1 gelöst.

Die mit der Erfindung erzielten Vorteile bestehen insbesondere darin, dass der grosse Herstellungsaufwand durch das Anschweissen der Auflagebügel und die dadurch bedingten nachfolgenden Richtarbeiten sowie die umfangreichen Korrosionsschutzmassnahmen entfallen. Durch die Lösbare Befestigung der aus Kunststoff bestehenden Auflagebügel ist neben der schnellen Montage vor Ort auch jederzeit eine Abstandsveränderung sowie Austauschbarkeit der Auflagebügel nach Massgabe von unterschiedlichen Backformen gegeben.

Die Weiterbildung der Erfindung nach Anspruch 2 ermöglicht, ein sicheres und schnelles Aufstecken der Auflagebügel bei einer gleichzeitigen Gewichtsreduzierung des Rechengehänges.

Die Ausgestaltung nach Anspruch 3 sichert auch bei grosser Belastung einen exakten und sicheren Sitz der Auflagebügel.

Die Ausgestaltungen nach den Ansprüchen 4 und 5 ermöglichen die sichere Auflage von Backformen mit unterschiedlicher Grössenordnung.

Gemäss der Ausgestaltung der Ansprüche 6 und 7 ist jeweils eine kostengünstige Befestigung des rutschfesten Belages auf den Auflagebügel gegeben.

Ein Ausführungsbeispiel der Erfindung ist in der Zeichnung dargestellt und wird im folgenden näher beschrieben.

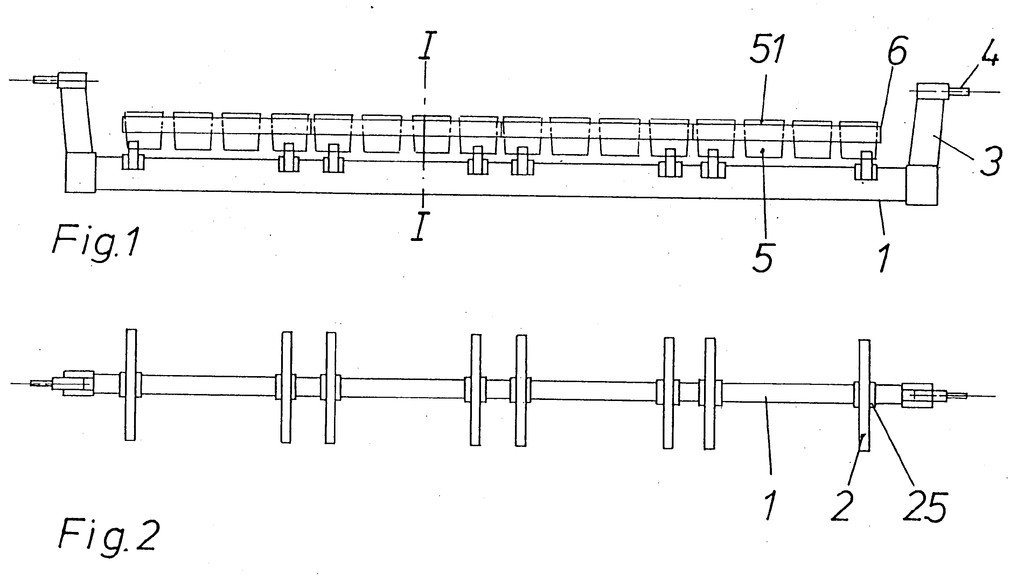

Es zeigen
- Fig. 1: eine Vorderansicht eines Rechengehänges mit Formverbänden
- Fig. 2: eine Draufsicht gemäss Fig. 1 ohne Formverbände
- Fig. 3: einen mit mehreren Abstufungen versehenen Auflagebügel
- Fig. 4: einen Auflagebügel mit rutschfestem Belag
- Fig. 5: einen Schnitt gemäss Linie I-I von Fig. 1

Der Träger 1 des Rechengehänges besteht aus einem Rechteckrohr aus Aluminium, auf dem Auflagebügel 2 aus gespritztem Kunststoff Lösbar befestigt sind. Stirnseitig ist der Träger 1 jeweils mit einem vorzugsweise aus Kunststoff bestehenden Gehängebügel 3 versehen. Mit Hilfe der in den Gehängebügel 3 angeordneten Bolzen 4 ist das Rechengehänge in dem nicht dargestellten Nachgärschrank in antreibbaren Endlosketten eingehangen.
Die Formen 5 für das Kapselbrot sind mittels eines Rahmens 6 zu Formverbände 51 zusammengefasst und liegen auf den Auflagebügeln 2 auf.

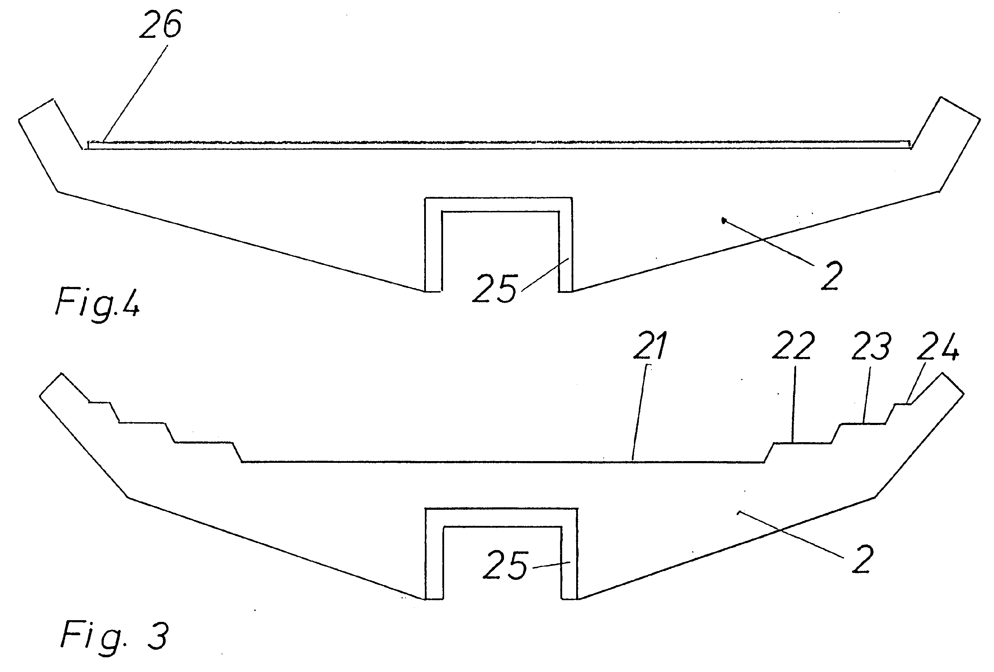

Mit dem in Fig. 3 dargestellten Auflagebügel 2, der mit mehreren Abstufungen 21 bis 24 ausgerüstet ist, können Formen bzw. Formverbände mit unterschiedlichen Abmessungen jeweils sicher aufgenommen werden. Durch die erfindungsgemässe Ausführung aus gespritztem Kunststoff können relativ enge Abstufungen auf einfache Weise realisiert werden, ohne dass Nacharbeiten anfallen. Auch der U-förmige Auflageflansch 25 kann problemlos nach der Massgabe des Rechteckrohres des Trägers 1 beim Spritzen des Auflagebügels 2 hergestellt werden.

Anstelle der Abstufung 21 bis 24 kann der Auflagebügel 2 auch mit einem elastischen rutschfestem Belag 26 versehen werden. Dadurch können auch unterschiedliche Formabmessungen jederzeit sicher aufgenommen werden. Dieser Belag 26, der auch aus einem geeigneten Kunststoff besteht, kann dabei durch einspritzen oder einschieben eines Profilbandes in einer nicht näher dargestellten Nut des Auflagebügels 2 erfolgen.

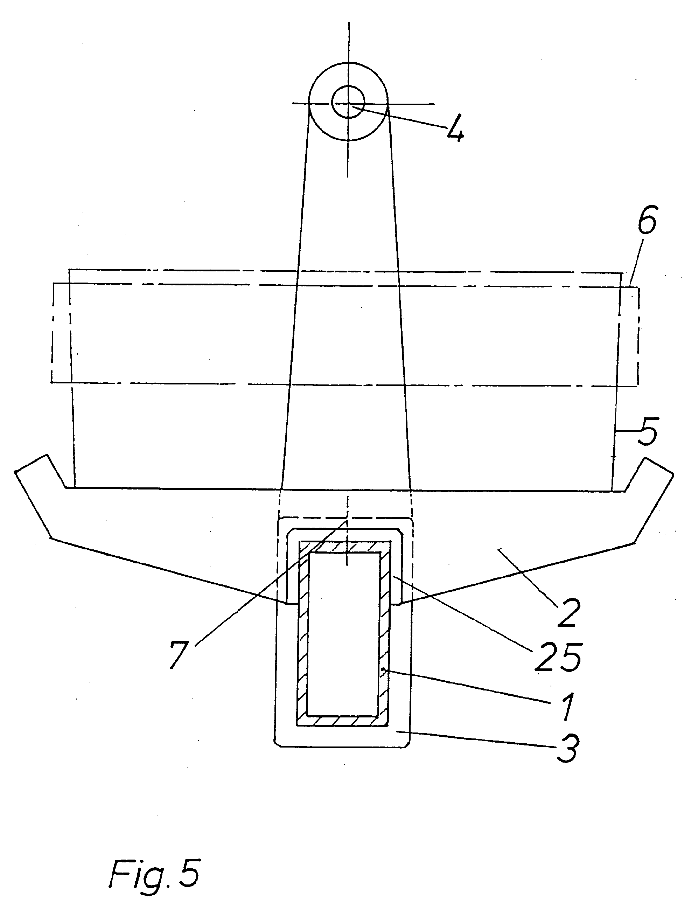

Der U-förmige Auflageflansch 25, der längst des Trägers 1 breiter als der Auflagebügel 2 ausgebildet ist, kann wie in Fig. 5 angedeutet zusätzlich mit Bohrungen 7 versehen sein oder mit Noppen ausgerüstet sein. Hierdurch ist eine zusätzliche Befestigung des Auflagebügels 2 durch Schrauben, Bolzen oder Niete an den Träger 1, der analog dann mit Bohrungen versehen ist, möglich.

## Patentansprüche

1. Rechengehänge für Nachgärschränke zur Aufnahme von Backformen (5) und/oder Formverbänden (51), bestehend aus einem mit mehreren Auflagebügeln (2) versehenen Träger (1), der über Gehängebügel (3) frei pendelnd die Breite eines Nachgärschrankes durchgreifend zum Einhängen an zwei endlosen Transportketten des Nachgärschrankes geeignet ist, dadurch gekennzeichnet, dass der Träger (1) aus einem nichtrostenden Metall besteht, auf dem Auflagebügel (2) aus Kunststoff lösbar befestigt sind.

2. Rechengehänge nach Anspruch 1, dadurch gekennzeichnet, dass der Träger (1) aus einem Rechteckrohr aus Aluminium besteht und die aus gespritztem Kunststoff bestehenden Auflagebügel (2) mit nach Massgabe des Trägers (1) gestalteten U-förmigen Auflageflansch (25) versehen sind.

3. Rechengehänge nach Anspruch 1 und 2, dadurch gekennzeichnet, dass der Auflageflansch (25) längst des Trägers (1) breiter als der Auflagebügel (2) ausgebildet ist und mit wenigstens einer Bohrung (7) oder Noppen ausgerüstet ist.

4. Rechengehänge nach einem der vorhergehenden Ansprüche, dadurch gekennzeichnet, dass die Auflagebügel (2) mit mehreren Abstufungen (21,22,23,24) ausgerüstet sind.

5. Rechengehänge nach einem der Ansprüche 1 bis 3, dadurch gekennzeichnet, dass die Auflagefläche für die Backformen des Auflagebügels (2) mit einem elastischen rutschfesten Belag (26) versehen ist.

6. Rechengehänge nach Anspruch 5, dadurch gekennzeichnet, dass der Belag (26) in eine Nut eingespritzt ist.

7. Rechengehänge nach Anspruch 5, dadurch gekennzeichnet, dass der Belag (26) aus einem Profilband besteht und in die Nut eingeschoben ist.

## Claims

1. Rack suspension for fermentation cabinets for the reception of baking moulds (5) and/or mould formations (51), consisting of a carrier (1) which is provided with several support brackets (2) and which is adapted for suspension at two endless transport chains of a fermentation cabinet by way of suspension brackets (3) to be freely pendulating and reaching over the width of the fermentation cabinet, characterised thereby that the carrier (1) consists of a non-rusting metal on which support brackets (2) of synthetic material are detachably fastened.

2. Rack suspension according to claim 1, characterised thereby that the carrier (1) consists of a rectangular tube of aluminium and the support brackets (2) consisting of injection-moulded synthetic material are provided with a U-shaped support flange (25) shaped in accordance with the carrier (1).

3. Rack suspension according to claim 1 and 2, characterised thereby that the support flange (25) is constructed to be wider along the carrier (1) than the support bracket (2) and is equipped with at least one bore (7) or knubs.

4. Rack suspension according to one of the preceding claims, characterised thereby that the support bracket (2) is equipped with several steps (21, 22, 23, 24).

5. Rack suspension according to one of claims 1 to 3, characterised thereby that the support surface, for the baking moulds, of the support bracket (2) is provided with a resilient slip-resistant coating (26).

6. Rack suspension according to claim 5, characterised thereby that the coating (26) is injection-moulded in a groove.

7. Rack suspension according to claim 5, characterised thereby that the coating (26) consists of a profile strip and is inserted into the groove.

## Revendications

1. Support en forme de râteau pour chambre de fermentation, destiné à soutenir des moules individuels (5) et/ou des plaques (51) à alvéoles, et composé d'une traverse (1) de support, qui porte des étriers (2) d'appui et qui peut passer sur toute la largeur de la chambre de fermentation en étant suspendu librement au moyen d'étriers (3) de suspension à deux chaînes convoyeuses sans fin, support caractérisé en ce que la traverse (1) est en une matière inoxydable à laquelle des étriers (2) d'appui en matière plastique sont fixés amoviblement.

2. Support en forme de râteau selon la revendication 1, caractérisé en ce que la traverse (1) de support est composée d'un tube en aluminium à section rectangulaire et en ce que les étriers d'appui (2), en matière plastique moulée par injection, comportent une collerette (25) d'appui, à section droite en U aux dimensions de cette traverse (1).

3. Support en forme de râteau selon les revendications 1 et 2, caractérisé en ce que, dans le sens de la longueur de la traverse (1) d'appui, la collerette (25) est plus large que l'étrier (2) d'appui et comporte au moins un perçage (7) ou des bossages.

4. Support en forme de râteau selon l'une des revendications précédentes, caractérisé en ce que les étriers (2) d'appui comportent plusieurs gradins (21, 22, 23, 24).

5. Support en forme de râteau selon l'une des revendications 1 à 3, caractérisé en ce que la surface de l'étrier (2) d'appui, qui est destinée à soutenir les moules, porte un revêtement (26) élastique antidérapant.

6. Support en forme de râteau selon la revendication 5, caractérisé en ce que le revêtement (26) est injecté dans une rainure.

7. Support en forme de râteau selon la revendication 5, caractérisé en ce que le revêtement (26) est formé d'une bande profilée et est inséré dans la rainure.
